# EUROPÄISCHE PATENTSCHRIFT

(11) **EP 1 084 071 B1**
(45) Veröffentlichungstag und Bekanntmachung des Hinweises auf die Patenterteilung: **18.09.2002**
(21) Anmeldenummer: 99919240.4
(22) Anmeldetag: 15.04.1999
(51) Int. Cl.: B65G 39/02

(54) **ANTRIEBSROLLE**
DRIVING ROLL
ROULEAU D'ENTRAINEMENT

(30) Priorität: 17.04.1998 DE 19817126
(43) Veröffentlichungstag der Anmeldung: 21.03.2001
(73) Patentinhaber: Interroll Holding AG, CH-6592 San Antonino (CH)
(72) Erfinder: SPECHT, Dieter, CH-6618 Arcegno (CH)
(74) Vertreter: Rutetzki, Andreas, Dipl.-Ing.
(86) Internationale Anmeldenummer: EP9902542
(87) Internationale Veröffentlichungsnummer: WO99054241

(56) Entgegenhaltungen:
- DE-A- 2 738 449
- DE-A- 3 616 840
- DE-C- 3 842 905
- US-A- 3 803 682

## Beschreibung

Die Erfindung betrifft eine Antriebsrolle und insbesondere eine Antriebsrolle bzw. eine angetriebene Rolle zur Verwendung in einer Rollenbahn oder als angetriebene Tragrolle für einen Gurtförderer.

Antriebsrollen, wie sie in Rollenbahnen oder als Tragrollen für Gurtförderer verwendet werden, bestehen üblicherweise aus einem zylindrischen Rollenkörper, der an seinen beiden Enden durch Rollenböden verschlossen wird. In den Rollenböden sind die Lager zur Lagerung der Antriebsrolle auf einer Rollenachse angeordnet. Bei einer Antriebsrolle bzw. einer angetriebenen Rolle ist meist ein Rollenboden als Antriebsglied ausgebildet, über das eine Antriebskraft auf die Rolle übertragen wird. Je nach Einsatzzweck können die Antriebsrollen über Riemen, insbesondere Zahnriemen oder Ketten, angetrieben werden. Hierbei muß das Antriebsglied entsprechend dem gewählten Antriebsmittel entweder als Kettenrad oder als Zahnrad für einen Zahnriemen ausgebildet sein.

Weiterhin gibt es verschiedene Möglichkeiten, eine Vielzahl von hintereinanderliegenden Antriebsrollen anzutreiben. Zum einen besteht die Möglichkeit, sämtliche Antriebsrollen über einen durchlaufenden Zahnriemen bzw. eine durchlaufende Kette tangential anzutreiben. Zum anderen kann auch ein Antrieb von Rolle zu Rolle erfolgen. Bei dem Antrieb von Rolle zu Rolle sind jeweils zwei Rollen über einen Zahnriemen bzw. eine Kette miteinander verbunden. Dies bedeutet, daß die Antriebsglieder jeweils zwei Ketten bzw. Zahnräder aufweisen müssen, eines zur Verbindung mit der vorhergehenden Rolle und eines zur Verbindung mit der nachfolgenden Rolle.

Aus diesen verschiedenen Antriebsmöglichkeiten für Antriebsrollen ergeben sich eine Vielzahl von unterschiedlichen Ausgestaltungsformen der Antriebsglieder.

So müssen die Antriebsglieder für den tangentialen Antrieb mittels Zahnriemen jeweils ein Zahnrad, für den tangentialen Antrieb mittels Kette jeweils ein Kettenrad, für den Antrieb mittels Zahnriemen von Rolle zu Rolle jeweils zwei Zahnräder und für den Antrieb mittels Kette von Rolle zu Rolle jeweils zwei Kettenräder aufweisen. Allein aus diesen vier Möglichkeiten ergeben sich vier unterschiedliche Antriebsglieder. Weitere Variationsmöglichkeiten der Antriebsglieder können sich aus verschiedenen Lagerungsarten ergeben.

Bei den bekannten Antriebsrollen ergeben sich aufgrund der Vielzahl verschieden ausgestalteter Antriebsglieder hohe Fertigungs- und Lagerungskosten für die Bereitstellung der unterschiedlichen Einzelteile. Weiterhin ist auch die Ersatzteilbereitstellung problematisch, da zu einer sicheren Ersatzteilversorgung stets sämtliche Typen von Antriebsgliedern bevorratet werden müssen.

Aus der DE 38 42 905 C1 ist eine Tragrolle für eine Rollenförderbahn bekannt, bei der an einem Rollenboden ein Spreizstück eingesetzt ist, auf dem zwei Kettenräder befestigt sind. Die Kettenräder sind auf das Spreizstück in Form einer zylindrischen Hülse aufgeschoben und werden durch einen Abstandsring von einander beabstandet gehalten. Das Spreizstück ist jedoch speziell für die Aufnahme von Kettenrädern eines bestimmten Durchmessers ausgebildet. Sollen Kettenräder einer anderen Größe oder eine andere Anzahl von Kettenrädern angebracht werden, so ist ein anderes, speziell ausgebildetes Spreizstück erforderlich.

Die US 3,803,682 offenbart eine Förderrolle in deren Rollenboden ein Antriebselement eingesetzt ist, auf das zwei Kettenräder aufgesetzt sind. Auch dieses Antriebselement ist speziell auf die Durchmesser und die Anzahl der aufzusetzenden Kettenräder abgestimmt. Sollen anders dimensionierte Kettenräder oder eine andere Anzahl von Kettenrädern angebracht werden, so ist ein geändertes Antriebselement erforderlich.

Die DE 36 16 840 A1 offenbart eine Förderrolle, in deren Rollenboden ein Antriebselement in Form eines Kettenrades eingesteckt und über Sicherungsringe an der Rollenachse gesichert ist. Hier ist nur ein Kettenrad vorgesehen. Soll diese Anordnung für besondere Einsatzzwecke geändert werden, so sind hier größere Veränderungen an der gesamten Ausgestaltung der Förderrolle erforderlich, insbesondere muß möglicherweise die Länge der Rollenachse entsprechend angepaßt werden.

Es ist Aufgabe der Erfindung, eine verbesserte Antriebsrolle zu schaffen, die bei einem vereinfachten Aufbau ein Zusammenwirken mit einer Vielzahl verschiedener Antriebsarten ermöglicht.

Die Aufgabe wird durch eine Antriebsrolle mit den in Anspruch 1 angegebenen Merkmalen gelöst. Vorteilhafte Ausführungsformen ergeben sich aus den Unteransprüchen.

Die Antriebsrolle weist eine universelle Kupplungseinrichtung auf, die ein variables Anbringen verschiedener Antriebsräder ermöglicht, ohne daß Veränderungen oder Anpassungen an dem Rollenboden erforderlich sind. Sämtliche Antriebsräder weisen eine derart standardisierte Ausgestaltung auf, daß sie sich beliebig mit der Antriebsrolle verbinden lassen. Durch diesen modularen Aufbau der Antriebsrolle verringert sich die Anzahl der erforderlichen unterschiedlichen Einzelteile zur Realisierung der verschiedensten Antriebsarten, wodurch die Herstellungs und Lagerhaltungskosten für die Antriebsrollen erheblich reduziert werden können.

Die Kupplungseinrichtung ist als erste Aufnahmeeinrichtung ausgebildet, an der zumindest ein Antriebsrad angebracht ist, wobei das Antriebsrad an einer ersten Stirnseite eine Verbindungseinrichtung aufweist, die mit der ersten Aufnahmeeinrichtung an dem Rollenboden in Eingriff tritt, und an einer entgegengesetzten zweiten Stirnseite eine zweite Aufnahmeeinrichtung zur Anbindung weiterer Antriebsräder oder einer Abschlußeinrichtung aufweist. An der Aufnahmeeinrichtung können sehr leicht verschiedene Antriebsräder mittels ihrer Verbindungseinrichtungen angebracht werden. Somit können je nach gewünschtem Antrieb an einem unveränderten, d.h. universell einsetzbaren Rollenkörper und Rollenboden verschiedene Antriebsräder angebracht werden. Weiterhin kann an einem bereits an dem Rollenboden angebrachten Antriebsrad ohne Probleme ein beliebiges weiteres Antriebsrad angebracht werden, da das erste Antriebsrad an seiner dem Rollenkörper abgewandten Stirnseite die zweite Aufnahmeeinrichtung aufweist, an der ein weiteres Antriebsrad mittels einer an diesem vorgesehenen Verbindungseinrichtung oder eine Abschlußeinrichtung angebracht werden kann. Somit ergibt sich ein äußerst flexibler modularer Aufbau der Antriebseinheit für die Antriebsrolle. Es können verschieden große und an ihrem Umfang unterschiedlich ausgestaltete Antriebsräder vorgesehen werden, welche je nach Bedarf in unterschiedlicher Stückzahl an einem unveränderte Antriebsrolle bzw. einen Rollenkörper angebracht werden können. So können die Antriebsräder unterschiedliche Durchmesser aufweisen oder beispielsweise als Ketten-, Zahnräder oder auch als Riemenscheiben ausgebildet sein.

Vorzugsweise ist die zweite Aufnahmeeinrichtung an dem Antriebsrad identisch zu der ersten Aufnahmeeinrichtung in dem Rollenboden ausgebildet. Dies ermöglicht eine noch flexiblere Verwendung der Antriebsräder, da ein und dasselbe Antriebsrad sowohl als erstes Antriebsrad direkt mit dem Rollenboden verbunden werden kann oder aber auch als zweites Antriebsrad an einem ersten Antriebsrad, welches mit dem Rollenboden verbunden ist, angebracht werden kann. Auf diese Weise kann die erforderliche Teilevielfalt erheblich reduziert werden, da zur Verwendung als erstes oder zweites Antriebsrad keine unterschiedliche Ausgestaltung der Antriebsräder erforderlich ist.

Weiter bevorzugt, umfaßt die Antriebsrolle vorzugsweise zwei identisch ausgebildete Antriebsräder, wobei das erste Antriebsrad mit seiner Verbindungseinrichtung mit der ersten Aufnahmeeinrichtung in dem Rollenboden und das zweite Antriebsrad mit seiner Verbindungseinrichtung mit der zweiten Aufnahmeeinrichtung an dem ersten Antriebsrad verbunden ist. Diese Anordnung ist bevorzugt, wenn ein Antrieb von Rolle zu Rolle erfolgt, d.h. jeweils eine Kette oder ein Riemen jeweils zwei Rollen miteinander verbindet. Durch die identische Ausgestaltung der Antriebsräder kann mit einer geringen Anzahl von unterschiedlichen Bauteilen eine hohe Variabilität bei der Anpassung des Antriebs an verschiedene Einsatzzwecke erreicht werden.

Die erste Aufnahmeeinrichtung ist zweckmäßigerweise als Öffnung in dem Rollenboden ausgebildet, in die das Antriebsrad mit seiner als Vorsprung ausgebildeten Verbindungseinrichtung eingesetzt ist. Bei dieser Ausgestaltung werden die unterschiedlichen Antriebsräder einfach in den Rollenboden bzw. ein anderes Antriebsrad eingesteckt, wodurch eine leichte Montage erreicht werden kann. Vorteilhafterweise ist dabei in der Öffnung ein Profil ausgebildet, in das ein korrespondierendes Profil auf dem Vorsprung eingreift, so daß eine formschlüssige Verbindung zwischen den Antriebsrädern bzw. einem Antriebsrad und dem Rollenboden erreicht wird, um eine sichere Kraftübertragung von den Antriebsrädern auf den Rollenboden und damit den Rollenkörper zu ermöglichen. Die Öffnungen und Vorsprünge können jedoch auch derart ausgebildet sein, daß eine kraftschlüssige Verbindung zwischen den Antriebsrädern und dem Rollenkörper geschaffen werden kann.

An den Aufnahme- und Verbindungseinrichtungen sind vorzugsweise Rastmittel, insbesondere in Form von Rastnuten und korrespondierenden Rastvorsprüngen ausgebildet. Dies ermöglicht, daß die Antriebsräder, wenn sie ineinander bzw. in den Rollenboden gesteckt werden, dort einrasten bzw. einschnappen, wodurch eine sichere Verbindung zwischen den einzelnen Bauteilen erzielt wird, so daß ein unbeabsichtigtes Lösen verhindert werden kann. Es sind keinerlei zusätzliche Montagevorgänge, wie beispielsweise Schrauben erforderlich, um die Antriebsräder untereinander bzw. mit dem Rollenboden zu verbinden.

Vorzugsweise ist das zumindest eine Antriebsrad ein Kettenrad. Durch ein solches Antriebsrad kann ein Kettenantrieb bzw. Rollenkettenantrieb zum Antrieb der Rollen eingesetzt werden, der eine äußerst sichere Kraftübertragung ermöglicht. Dabei können die verwendeten Kettenräder je nach gewünschtem Übersetzungsverhältnis mit unterschiedlichen Durchmessern bzw. Zähnezahlen ausgebildet werden, wodurch eine äußerst flexible Anpassung des Antriebs an jeweilige Erfordernisse der Rollenbahn bzw. des Gurtförderers möglich wird.

Weiterhin kann das Antriebsrad bevorzugt an seinem Umfang eine Verzahnung zur Aufnahme eines Zahnriemens aufweisen. Es ist somit leicht möglich eine unveränderte bzw. universelle Antriebsrolle falls gewünscht ebenfalls durch einen Zahnriemen anzutreiben, wobei lediglich ein anderes Antriebsrad mit entsprechender Verzahnung an dem Rollenboden angebracht wird. Dabei können die Antriebsräder auch hier je nach gewünschten Übersetzungsverhältnis unterschiedliche Durchmesser und Zähnezahlen aufweisen. Wenn ein Antrieb von Rolle zu Rolle mittels Zahnriemen gewünscht ist, können auch hier zwei vorzugsweise identische Zahnräder hintereinander an dem Rollenboden angebracht werden.

Bevorzugt ist das zumindest eine Antriebsrad auf einer die Antriebsrolle tragenden Achse gelagert. Auf diese Weise können die von den Antriebsmitteln, wie beispielsweise einer Kette bzw. einem Zahnriemen aufgebrachten Radialkräfte direkt im Bereich des Antriebsrades auf die Rollenachse übertragen werden, ohne in die Antriebsrolle eingeleitet zu werden und deren Lauf zu beeinträchtigen.

An dem zumindest einem Antriebsrad ist zweckmäßiger Weise ein Sitz zur Aufnahme eines Lagers ausgebildet. So kann direkt an dem Antriebsrad ein entsprechendes Lager, beispielsweise ein Wälzlager, eingebaut werden, um auch größere auftretende Kräfte, insbesondere Radialkräfte sicher auf die Rollenachse zu übertragen.

Bevorzugt weist das zumindest eine Antriebsrad und/oder die Abschlußeinrichtung eine Gleitlagerfläche auf, welche mit der Achse in gleitendem Kontakt ist. Diese Ausgestaltung ist äußerst kostengünstig, da keine zusätzlichen Lagerelemente eingesetzt werden müssen. So können, insbesondere wenn das Antriebsrad und die Abschlußeinrichtung aus Kunststoff gefertigt sind, diese direkt auf der Rollenachse gleiten. Diese Ausgestaltung bietet sich insbesondere für Antriebsmittel an, welche nur geringe Radialkräfte auf das Antriebsrad übertragen, wie beispielsweise bei einem tangentialen Antrieb der Antriebsräder durch Zahnriemen oder Ketten.

Nachfolgend wird die Erfindung beispielhaft anhand beiliegender Zeichnungen beschrieben. In diesen zeigt:
- Figur 1:: eine Schnittansicht eines Rollenbodens mit einem aufgesetzten Kettenrad,
- Figur 2:: eine Schnittansicht eines Rollenbodens mit zwei aufgesetzten Kettenrädern,
- Figur 3:: eine Schnittansicht eines Rollenbodens mit einem aufgesetzten Kettenrad mit eingesetztem Wälzlager,
- Figur 4:: eine Schnittansicht eines Rollenbodens mit zwei aufgesetzten Kettenrädern und einem eingesetzten Wälzlager,
- Figur 5:: eine Schnittansicht eines Rollenbodens mit zwei aufgesetzten Zahnrädern zum Antrieb über Zahnriemen und
- Figur 6:: eine Schnittansicht eines Rollenbodens mit zwei aufgesetzten Zahnrädern und eingesetztem Wälzlager.

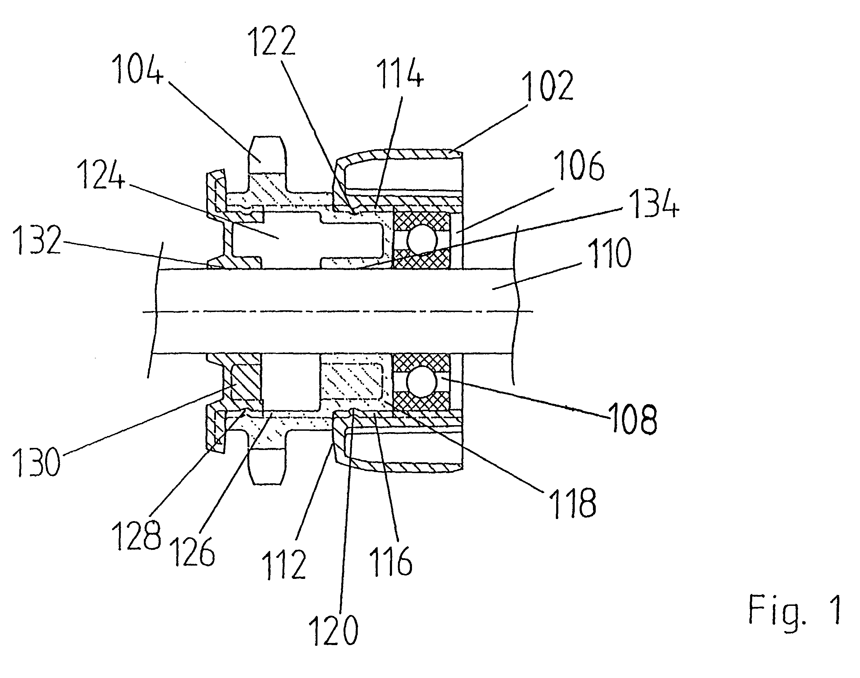

In den Figuren 1 bis 6 ist jeweils nur der Rollenboden einer erfindungsgemäßen Antriebsrolle mit angesetzten Antriebsrädern gezeigt.

Figur 1 zeigt eine Schnittansicht eines Rollenbodens 102 einer erfindungsgemäßen Antriebsrolle mit einem angesetzten Kettenrad 104. Der Rollenboden 102 ist beispielsweise als kreisförmiges Kunststoffteil ausgebildet, welches an seinem Umfang mit einem hier nicht gezeigten Rollenkörper verbunden wird. Im Inneren weist der Rollenboden 102 eine Öffnung 106 auf, in die ein Kugellager 108 eingesetzt ist, welches die Antriebsrolle auf einer Rollenachse 110 trägt. Das Kugellager 108 kann zusätzlich in bekannter Weise beispielsweise durch Sicherungsringe gegen axiales Verschieben auf der Rollenachse 110 gesichert werden, so daß die Antriebsrolle in axialer Richtung auf der Rollenachse 110 fixiert ist (hier nicht gezeigt). Die Öffnung 106 erstreckt sich bis zur Stirnseite 112 des Rollenbodens 102. Der äußere Umfang der Öffnung 106, welche vorzugsweise im wesentlichen kreisförmig ist, weist eine Profilierung bzw. eine Verzahnung 114 auf, welche mit einer entsprechend ausgestalteten Profilierung bzw. Verzahnung 116 an dem Kettenrad 104 in Eingriff tritt. Die Verzahnung 116 ist an einem Vorsprung 118 ausgebildet, der sich ausgehend von einer Stirnseite des Kettenrades 104 erstreckt. Mit dem Vorsprung 118 ist das Kettenrad 104 in die Öffnung 106 an dem Rollenboden 102 eingesteckt, so daß die Verzahnungen 114 und 116 miteinander in Eingriff treten. Ferner ist an dem Umfang der Öffnung 106 an ihrem der Stirnseite 112 des Rollenbodens 102 zugewandten Ende ein ringförmiger Rastvorsprung 120 ausgebildet. Der Umfang des Vorsprungs 118 des Kettenrades 104 weist eine entsprechende Rastnut 122 auf, welche mit dem ringförmigen Rastvorsprung 120 in Eingriff tritt, wenn das Kettenrad 104 in die Öffnung 106 an dem Rollenboden 102 eingeschoben wird. Somit entsteht eine sichere Verbindung zwischen dem Kettenrad 104 und dem Rollenboden 102, welche verhindert, daß das Kettenrad 104 aus der Öffnung 106 herausrutschen kann. Weiter wird durch die Verzahnungen 114 und 116 eine derart formschlüssige Verbindung zwischen dem Kettenrad 104 und dem Rollenboden 102 erreicht, daß eine sichere Kraftübertragung von dem Kettenrad 104 auf den Rollenboden 102 und damit auf einen Rollenkörper ermöglicht wird. An seinem dem Rollenboden 102 abgewandten Ende bzw. der dem Rollenboden 102 abgewandten Stirnseite weist das Kettenrad 104 eine Öffnung 124 auf. Die Öffnung 124 entspricht in ihrer Ausgestaltung im wesentlichen der Öffnung 106 in dem Rollenboden 102. Dies bedeutet insbesondere, daß sie dieselben Abmessungen aufweist. Ferner ist im Umfang der Öffnung 124 eine Verzahnung 126 ausgebildet, die in ihren Abmessungen der Verzahnung 114 in dem Rollenboden 102 entspricht. Zusätzlich ist entlang dem Umfang der Öffnung 124 ein dem Rastvorsprung 120 an dem Rollenboden 102 entsprechender Rastvorsprung 128 ausgebildet, der sich ringförmig entlang dem Umfang der Öffnung 124 im Bereich des dem Rollenboden 102 abgewandten Endes des Kettenrades 104 erstreckt. In dem in Figur 1 gezeigten Ausführungsbeispiel ist in die Öffnung 124 eine Abschlußeinrichtung in Form eines Endringes 130 eingesetzt, der die Öffnung 124 verschließt und gleichzeitig als zusätzliches Lager für das Kettenrad 104 dient. Der Endring 130 weist in seiner Mitte eine Öffnung 132 auf, die in ihrem Durchmesser an den Außendurchmesser der Rollenachse 110 angepaßt ist. Der innere Umfang der Öffnung 132 ist als Gleitfläche ausgebildet, welche gemeinsam mit der Oberfläche der Rollenachse 110 ein Gleitlager für das Kettenrad 104 bildet. Zusätzlich weist das Kettenrad 104 auch im Inneren des Vorsprungs 118 eine Öffnung 134 auf, deren Durchmesser ebenfalls dem Außendurchmesser der Rollenachse 110 angepaßt ist und die an ihrem Umfang als Gleitfläche ausgebildet ist, um gleitend auf der Rollenachse 110 zu rotieren. So bildet auch die Öffnung 134 ein Gleitlager, über welches das Kettenrad 104 auf der Rollenachse 110 getragen wird, so daß keinerlei unerwünschte Querkräfte von dem Kettenrad 104 auf den Rollenboden 102 und damit auf den Rollenkörper übertragen werden. Sowohl der Rollenboden 102 als auch das Kettenrad 104 und der Endring 130 können kostengünstig aus Kunststoff beispielsweise durch Spritzgießen gefertigt werden, können jedoch im Falle von größeren auftretenden Kräften beispielsweise auch aus Metall hergestellt werden.

Die hier gezeigte Ausgestaltung des Rollenbodens 102 und des Endringes 130 ermöglicht ferner, den Rollenboden 102 auch an einem Rollenende zu verwenden, an dem keine Antriebsräder angebracht werden. In diesem Falle wird der Endring 130 direkt in die Öffnung 106 in dem Rollenboden 102 eingesetzt, was aufgrund der gleichen Ausgestaltung der Öffnungen 106 und 124 möglich ist. Dabei kann auf dieselbe Weise, wie zuvor beschrieben, in dem Rollenboden 102 ein Kugellager 108 angeordnet werden, welches dann durch den Endring 130 fixiert wird. Somit sind der Rollenboden 102 sowie der Endring 130 universell einsetzbar, wodurch die erforderliche Teilevielfalt reduziert wird.

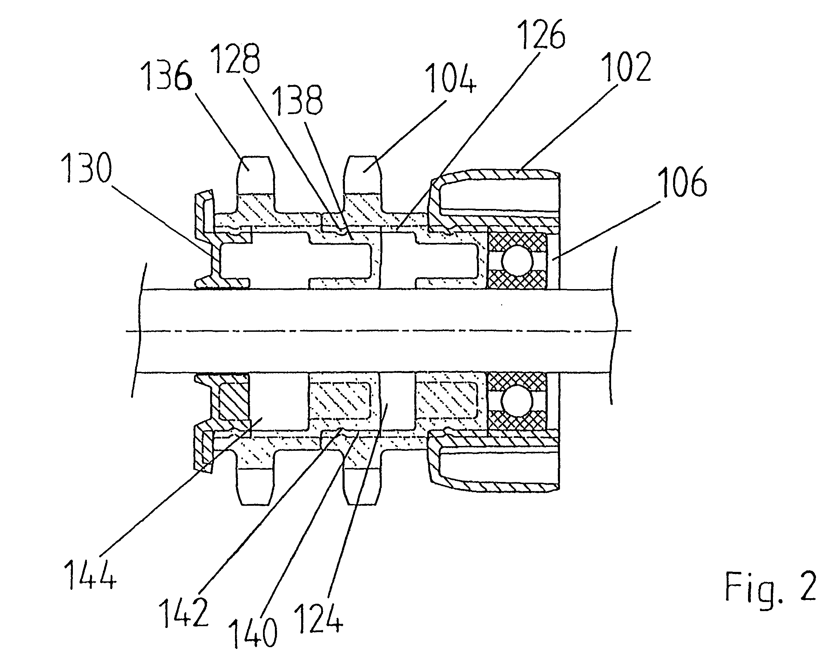

Figur 2 zeigt eine Schnittansicht durch einen Rollenboden 102 mit angesetzten Kettenrädern 104, 136 gemäß der Erfindung. Der Rollenboden 102 mit dem ersten angesetzten Kettenrad 104 entspricht der anhand von Figur 1 erläuterten Ausführungsform. Anstelle eines Endringes 130 ist bei der in Figur 2 gezeigten Ausführungsform jedoch ein zweites Kettenrad 136 in die Öffnung 124 des ersten Kettenrades 104 eingesetzt. Das Kettenrad 136 ist identisch zu dem Kettenrad 104 ausgebildet. Da die Öffnung 124, wie anhand von Figur 1 erläutert identisch ausgebildet ist zu der Öffnung 106 in dem Rollenboden 102, kann das Kettenrad 136 mit seinem Vorsprung 138 in die Öffnung 124 des ersten Kettenrades 104 eingesetzt werden. Dabei greift das Kettenrad 136 mit einer entsprechenden Verzahnung 140 und einer Rastnut 142 in die Verzahnung 126 bzw. den Rastvorsprung 128 in der Öffnung 124 des Kettenrades 104 ein. Wenn zwei Kettenräder 104, 136 erforderlich sind, können diese somit einfach ineinander gesteckt und dann in den Rollenboden 102 gesteckt werden, ohne daß weitere Montage- oder Anpassungsmaßnahmen erforderlich sind. Da die beiden Kettenräder 104, 136 identisch sind, sind keine weiteren speziellen Bauteile erforderlich. Der Endring 130 ist in der hier gezeigten Ausführungsform in die Öffnung 144 des zweiten Kettenrades 136, welche identisch zu der Öffnung 124 ausgestaltet ist, eingesetzt. Die Lagerung der Klettenräder 104, 136 entspricht im wesentlichen der Lagerung durch Gleitlager, wie sie anhand von Figur 1 erläutert wurde. Zusätzlich zu den Gleitflächen des Endringes 130 und des Kettenrades 104 kommt jedoch hier noch eine Gleitfläche des Kettenrades 136 in der Öffnung des Vorsprunges 138 hinzu, die, da die Kettenräder 104 und 136 identisch ausgebildet sind, der anhand von Figur 1 erläuterten Öffnung 134 entspricht.

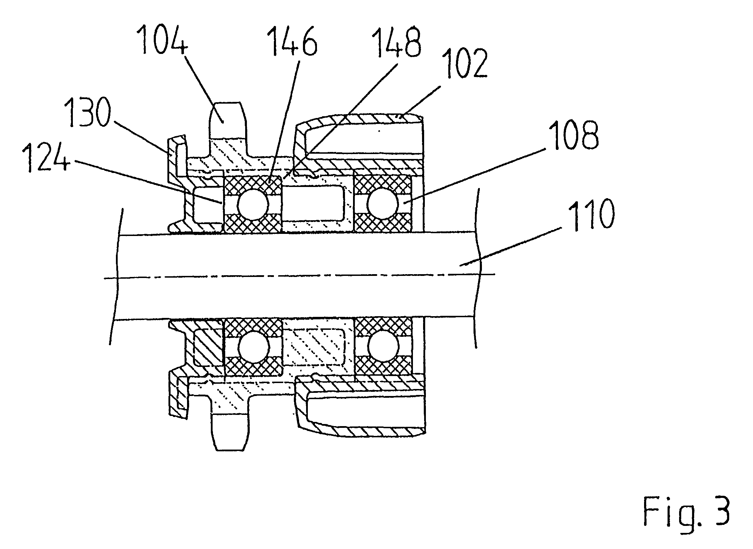

Figur 3 zeigt eine Schnittansicht durch eine weitere Ausführungsform der Erfindung, welche im wesentlichen der anhand von Figur 1 erläuterten Ausführungsform entspricht. Der in Figur 3 gezeigte Rollenboden 102, das Kettenrad 104, der Endring 130 sowie die Rollenachse 110 und das Wälzlager 108 entsprechen den anhand von Figur 1 erläuterten Bauteilen. Zusätzlich ist jedoch in der in Figur 3 gezeigten Ausführungsform ein zweites Kugellager 146 in der Öffnung 124 des Kettenrades 104 angeordnet. Das Kugellager 146 lagert das Kettenrad 104 drehbar auf der Rollenachse 110. Auf diese Weise können höhere Kräfte, insbesondere Radialkräfte von dem Kettenrad 104 auf die Rollenachse 110 übertragen werden, als es mit den anhand von Figur 1 erläuterten Gleitlagern möglich ist. Auch bei der in Figur 3 gezeigten Ausführungsform sind die Gleitlager weiter vorhanden, da das Kettenrad 104 und der Endring 130 identisch zu den in Figur 1 gezeigten Teilen sind. Der Endring 130 dient zusätzlich dazu, das Kugellager 146 in der Öffnung 124 axial zu fixieren. Dabei wird das Kugellager 146 zwischen einem in der Öffnung 124 ausgebildeten Absatz 148 und dem Endring 130 gehalten. Durch diese Ausgestaltung des Kettenrades 104 wird ein noch flexiblerer Einsatz identischer Bauteile erreicht, da in das Kettenrad 104 ohne weitere Veränderungen an den Bauteilen einfach ein zusätzliches Wälzlager bzw. Kugellager 146 eingesetzt werden kann.

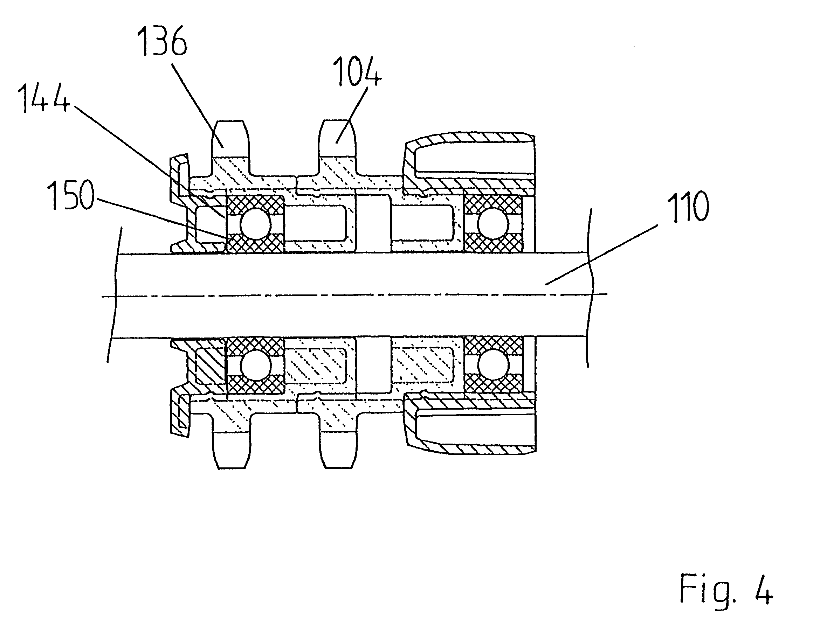

Figur 4 zeigt die anhand von Figur 2 erläuterte Ausführungsform, bei der ein zusätzliches Wälz- bzw. Kugellager 150 in die Öffnung 144 des Kettenrades 136 eingesetzt ist. Da die Kettenräder 104 und 136, wie anhand von Figur 2 erläutert, identisch sind, entspricht die Anordnung des Kugellagers 150 in dem Kettenrad 136 genau der Anordnung des Kugellagers 146 in dem Kettenrad 104, wie anhand von Figur 3 beschrieben. Es kann somit auch bei der Verwendung von zwei Kettenrädern 104, 136 einfach ohne zusätzlichen Aufwand oder Einsatz zusätzlicher Bauteile ein zusätzliches Wälzlager, hier in Form eines Kugellagers 150 angeordnet werden, um auch größere Kräfte von den Kettenrädern 104, 136 sicher auf die Rollenachse 110 übertragen zu können. Die gesamte übrige Ausgestaltung der in Figur 4 gezeigten Anordnung entspricht der anhand von Figur 2 beschriebenen Ausführungsform, insbesondere handelt es sich bei den Kettenrädern 104, 136 um identische Bauteile.

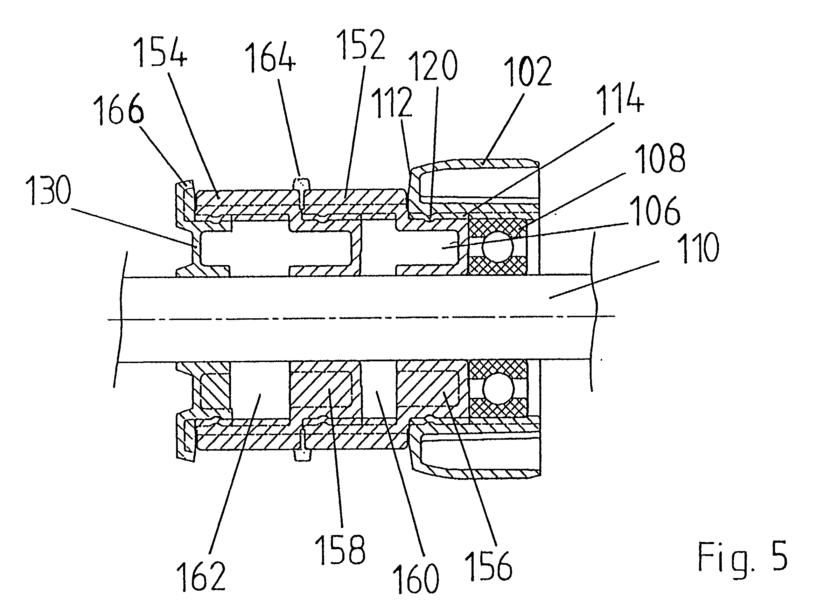

Figur 5 zeigt ein Ausführungsbeispiel der erfindungsgemäßen Antriebsrolle zur Verwendung mit einem Antrieb durch Zahnriemen. In Figur 5 ist, wie auch in den vorangehenden Figuren, lediglich der Rollenboden 102 mit den daran angesetzten Antriebsrädern gezeigt. Der Rollenkörper, welcher mit dem Rollenboden 102 verbunden ist, ist hier nicht dargestellt. Der Rollenboden 102 sowie das darin angeordnete Kugellager 108, welches die Antriebsrolle auf der Rollenachse 110 lagert, sind identisch zu den anhand von Figur 1 bis Figur 4 erläuterten entsprechenden Bauteilen. Im Unterschied zu den zuvor beschriebenen Ausführungsformen sind in Figur 5 an dem Rollenboden zwei Antriebsräder in Form von Zahnrädern 152 und 154 angebracht. Die Zahnräder 152 und 154 sind identisch ausgebildet und weisen an ihrem äußeren Umfang eine Verzahnung auf, die mit entsprechenden Zahnriemen zum Antrieb der Antriebsrolle in Eingriff treten kann. Die Zahnräder 152, 154 weisen an ihrer einen Stirnseite jeweils einen Vorsprung 156 bzw. 158 auf, welche in ihrer Ausgestaltung den Vorsprüngen 118 und 138 entsprechen, die anhand von Figuren 1 und 2 erläutert wurden. Das Zahnrad 152 ist mit seinem Vorsprung 156 in die Öffnung 106 in dem Rollenboden 102 eingesetzt, dabei greift der Vorsprung 156 mit einer entsprechenden Verzahnung in die Verzahnung 114 in der Öffnung 106 ein, wie anhand von Figur 1 erläutert. Der Vorsprung 156 weist ebenfalls eine Rastnut auf, welche mit dem Rastvorsprung 120 in der Öffnung 106 in Eingriff tritt. Insgesamt unterscheiden sich die Zahnräder 152 und 154 lediglich in der Ausgestaltung ihres äußeren Umfanges von den Kettenrädern 104 und 136. Der innere Aufbau, d.h. insbesondere der Aufbau der Vorsprünge 156, 158 und Öffnungen 160, 152 ist identisch zu dem inneren Aufbau der Vorsprünge 118, 138 und der Öffnungen 124 und 144 der Kettenräder 104 und 136, wie sie in den Figuren 1 bis 4 dargestellt sind. Somit wird das zweite Zahnrad 154 ebenfalls einfach in die Öffnung 160 des ersten Zahnrades 152, welches in die Öffnung 106 des Rollenbodens 102 eingesetzt ist, eingesteckt, wo es mit einer entsprechenden Verzahnung und einem entsprechenden Rastvorsprung in Eingriff tritt. Zusätzlich ist zwischen den beiden Zahnrädern 152, 154 ein Distanzring 164 angeordnet bzw. eingeklemmt, der die Laufflächen für Zahnriemen auf den Zahnrädern 152 und 154 voneinander trennt, um ein Aneinanderstoßen der Zahnriemen im Betrieb zu verhindern. In die Öffnung 162 des Zahnrades 154 ist der Endring 130 eingesetzt, wie er anhand der vorangehenden Figuren erläutert wurde. Der Endring 130 weist einen ringförmigen Vorsprung 166 auf, welcher sich über die äußere Umfangsfläche des Zahnrades 154 radial hinaus erstreckt und somit als Anschlagring für einen Zahnriemen dient. Zwei Zahnriemen, welche auf den Zahnrädern 152 und 154 laufen können, können somit zwischen dem Vorsprung 166 und dem Distanzring 164 bzw. dem Distanzring 164 und der Stirnseite 112 des Rollenbodens 102 geführt werden. Die Lagerung der Zahnräder 152 und 154 auf der Rollenachse 110 entspricht der anhand von Figur 2 beschriebenen Gleitlagerung der Kettenräder 104 und 136, da der innere Aufbau der Zahnräder 152, 154 identisch zu demjenigen der Kettenräder 104, 136 ist.

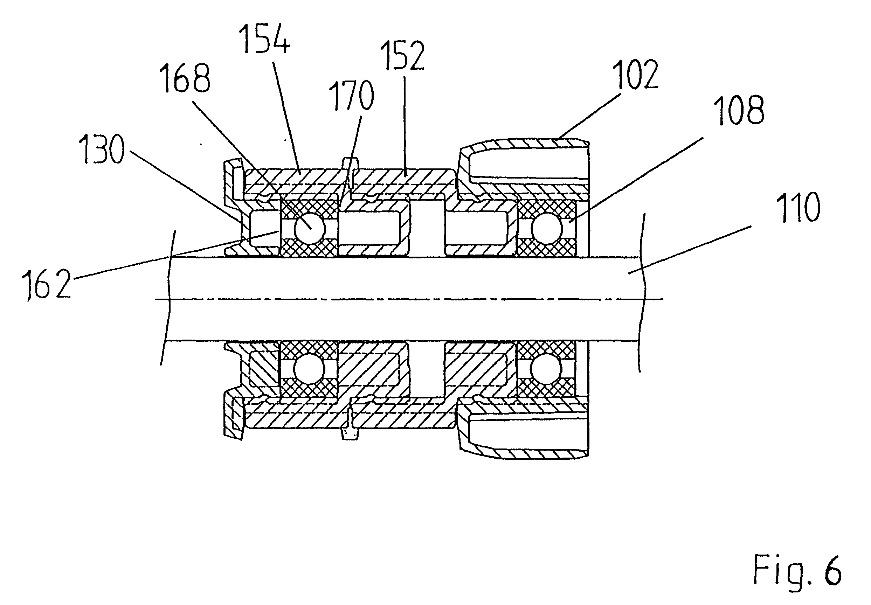

Figur 6 zeigt einen Querschnitt durch eine Variante der anhand von Figur 5 beschriebenen Ausführungsform. Der Rollenboden 102 und das Kugellager 108, die beiden Zahnräder 152, 154 sowie der Endring 130 entsprechen den in Figur 5 gezeigten Bauteilen. Zusätzlich ist jedoch in Figur 6 ein Wälzlager, hier in Form eines Kugellagers 168, in der Öffnung 162 des Zahnrades 154 angeordnet. Die Anordnung des Kugellagers 168 ist identisch zu der Anordnung des Kugellagers 150 in der Öffnung 144 des Kettenrades 136, wie in Figur 4 gezeigt. Auch das Kugellager 168 wird zwischen dem Endring 130 und einem Anschlag bzw. einer Schulter 170 in der Öffnung 162 gehalten. Dabei sorgt das Kugellager 168 für eine höhere Tragfähigkeit der Lagerung der Zahnräder 152, 154 auf der Rollenachse 110 als dies allein durch die Gleitlagerung, wie sie anhand von Figur 2 beschrieben wurde, möglich wäre.

Wie die in den Figuren 1 bis 6 beschriebenen Beispiele zeigen, kann bei der erfindungsgemäßen Antriebsrolle, welche einen modularen Aufbau aufweist, eine Vielzahl unterschiedlicher Antriebsarten realisiert werden, ohne das gleichzeitig eine Vielzahl von unterschiedlichen, speziell angepaßten Bauteilen erforderlich ist. So können je nach Bedarf unterschiedliche Zahn- bzw. Kettenräder in den Rollenboden 102 eingesteckt werden, und es können je nach Erfordernis weitere Zahn- bzw. Kettenräder in ein an dem Rollenboden 102 angebrachtes Zahn- bzw. Kettenrad eingesteckt werden. Zusätzlich ist es leicht möglich, Ketten- bzw. Zahnräder von verschiedensten Durchmessern zu verwenden, welche leicht miteinander kombiniert werden können.

### Bezugszeichenliste

- 102: Rollenboden
- 104: Kettenrad
- 106: Öffnung
- 108: Kugellager
- 110: Rollenachse
- 112: Stirnseite
- 114: Verzahnung
- 116: Verzahnung
- 118: Vorsprung
- 120: Rastvorsprung
- 122: Rastnut
- 124: Öffnung
- 126: Verzahnung
- 128: Rastvorsprung
- 130: Endring
- 132: Öffnung
- 134: Öffnung
- 136: Kettenrad
- 138: Vorsprung
- 140: Verzahnung
- 142: Rastnut
- 144: Öffnung
- 146: Kugellager
- 148: Schulter
- 150: Kugellager
- 152: Zahnrad
- 154: Zahnrad
- 156: Vorsprung
- 158: Vorsprung
- 160: Öffnung
- 162: Öffnung
- 164: Distanzring
- 166: Vorsprung
- 168: Kugellager
- 170: Schulter

## Patentansprüche

1. Antriebsrolle für eine Rollenbahn oder einen Gurtförderer, bei welcher zumindest ein Rollenboden (102) mit einer ersten Aufnahmeeinrichtung (106, 114) versehen ist, an der zumindest ein modulares Antriebsrad (104; 152) angebracht ist, wobei das Antriebsrad (104; 152) an einer ersten Stirnseite eine Verbindungseinrichtung (116, 118; 156) aufweist, die mit der ersten Aufnahmeeinrichtung (106, 114) an dem Rollenboden (102) in Eingriff tritt, und an einer entgegengesetzten zweiten Stirnseite eine zweite Aufnahmeeinrichtung (124, 126; 160) zur Anbindung weiterer Antriebsräder (136; 154) oder einer Abschlußeinrichtung (130) aufweist.

2. Antriebsrolle nach Anspruch 1, bei welcher die zweite Aufmahmeeinrichtung (124, 126; 160) an dem Antriebsrad (104; 152) identisch zu der ersten Aufnahmeeinrichtung (106, 114) in dem Rollenboden (102) ausgebildet ist.

3. Antriebsrolle nach Anspruch 1 oder 2, welche zwei vorzugsweise identisch ausgebildete Antriebsräder (104, 136; 152, 154) umfaßt, wobei das erste Antriebsrad (104; 152) mit seiner Verbindungseinrichtung (116, 118; 156) mit der ersten Aufnahmeeinrichtung (106, 114) in dem Rollenboden (102) und das zweite Antriebsrad (136; 154) mit seiner Verbindungseinrichtung (138, 140; 158) mit der zweiten Aufnahmeeinrichtung (124, 126; 160) an dem ersten Antriebsrad (104; 152) verbunden ist.

4. Antriebsrolle nach einem der vorangehenden Ansprüche, bei welcher die erste Aufnahmeeinrichtung als Öffnung (106) in dem Rollenboden (102) ausgebildet ist, in die das Antriebsrad (104; 152) mit seiner als Vorsprung (118; 156) ausgebildeten Verbindungseinrichtung eingesetzt ist.

5. Antriebsrolle nach einem der vorangehenden Ansprüche, bei welcher an den Aufnahme- (106, 114; 160) und Verbindungseinrichtungen (116, 118; 156) Rastmittel (120, 122, 128, 142) insbesondere in Form von Rastnuten (122, 142) und korrespondierenden Rastvorsprüngen (120, 128) ausgebildet sind.

6. Antriebsrolle nach einem der vorangehenden Ansprüche, bei welcher das zumindest eine Antriebsrad ein Kettenrad (104) ist.

7. Antriebsrolle nach einem der vorangehenden Ansprüche, bei welcher das zumindest eine Antriebsrad (152) an seinem Umfang eine Verzahnung zur Aufnahme eines Zahnriemens aufweist.

8. Antriebsrolle nach einem der vorangehenden Ansprüche, bei welcher das zumindest eine Antriebsrad (104; 152) auf einer die Antriebsrolle tragenden Rollenachse (110) gelagert ist.

9. Antriebsrolle nach Anspruch 8, bei welcher an dem zumindest einen Antriebsrad (104; 152) ein Sitz (148) zur Aufnahme eines Lagers (146) ausgebildet ist.

10. Antriebsrolle nach Anspruch 8 oder 9, bei welcher das zumindest eine Antriebsrad (104; 152) und/oder die Abschlußeinrichtung (130) eine Gleitlagerfläche (134, 132) aufweist, welche mit der Rollenachse (110) in gleitendem Kontakt ist.

## Claims

1. Drive roller for a roller conveyor or a belt conveyor, in the case of which at least one roller base (102) is provided with a first accommodating device (106, 114) on which at least one modular drive wheel (104; 152) is fitted, the drive wheel (104; 152) having, on a first end side, a connecting device (116, 118; 156) which engages with the first accommodating device (106, 114) on the roller base (102) and, on an opposite, second end side, a second accommodating device (124, 126; 160) for the attachment of further drive wheels (136; 154) or of a terminating device (130).

2. Drive roller according to Claim 1, in the case of which the second accommodating device (124, 126; 160) on the drive wheel (104; 152) is of identical design to the first accommodating device (106, 114) in the roller base (102).

3. Drive roller according to Claim 1 or 2, which comprises two preferably identically designed drive wheels (104, 136; 152, 154), the first drive wheel (104; 152) being connected, by its connecting device (116, 118; 156), to the first accommodating device (106, 114) in the roller base (102) and the second drive wheel (136; 154) being connected, by its connecting device (138, 140; 158), to the second accommodating device (124, 126; 160) on the first drive wheel (104; 152).

4. Drive roller according to one of the preceding claims, in the case of which the first accommodating device is designed as an opening (106) in the roller base (102), into which the drive wheel (104; 152) is inserted by way of its connecting device, which is designed as a protrusion (118; 156).

5. Drive roller according to one of the preceding claims, in the case of which latching means (120, 122, 128, 142), in particular in the form of latching grooves (122, 142) and corresponding latching protrusions (120, 128), are formed on the accommodating devices (106, 114; 160) and connecting devices (116, 118; 156).

6. Drive roller according to one of the preceding claims, in the case of which the at least one drive wheel is a chain wheel (104).

7. Drive roller according to one of the preceding claims, in the case of which the at least one drive wheel (152) has a toothing formation on its circumference for the purpose of accommodating a toothed belt.

8. Drive roller according to one of the preceding claims, in the case of which the at least one drive wheel (104; 152) is mounted on a roller spindle (110) which bears the drive roller.

9. Drive roller according to Claim 8, in the case of which a seat (148) for accommodating a bearing (146) is formed on the at least one drive wheel (104; 152).

10. Drive roller according to Claim 8 or 9, in the case of which the at least one drive wheel (104; 152) and/or the terminating device (130) has a slide-bearing surface (134, 132), which is in sliding contact with the roller spindle (110).

## Revendications

1. Rouleau d'entraînement pour un transporteur à rouleau ou un transporteur à courroie, **caractérisé en ce qu'**au moins un corps de rouleau (102) est pourvu d'un premier dispositif de réception (106, 114) sur lequel est montée au moins une roue de commande modulaire (104; 152), moyennant quoi la roue de commande (104; 152) comporte un dispositif de liaison (116, 118 ; 156) sur une première face frontale, lequel est en prise avec le premier dispositif de réception (106, 114) sur le corps de rouleau (102), et comporte sur une deuxième face frontale opposée un deuxième dispositif de réception (124, 126; 160) pour la liaison d'autres roues de commande (136; 154) ou d'un dispositif de fermeture (130).

2. Rouleau d'entraînement selon la revendication 1, **caractérisé en ce que** le deuxième dispositif de réception (124, 126; 160) sur la roue de commande (104; 152) est constitué de manière identique au premier dispositif de réception (106, 114) dans le corps de rouleau (102).

3. Rouleau d'entraînement selon la revendication 1 ou 2, qui comprend deux roues de commande (104, 136; 152, 154) avantageusement formées de manière identique, moyennant quoi la première roue de commande (104; 152) est reliée par son dispositif de liaison (116, 118; 156) au premier dispositif de réception (106, 114) dans le corps de rouleau (102) et la deuxième roue de commande (136; 154) est reliée par son dispositif de liaison (138, 140; 158) au deuxième dispositif de réception (124, 126; 160) sur la première roue de commande (104; 152).

4. Rouleau d'entraînement selon l'une des revendications précédentes, dans lequel le premier dispositif de réception est constitué sous forme d'ouverture (106) dans le corps de rouleau (102), dans laquelle la roue de commande (104; 152) est insérée avec son dispositif de liaison constitué en tant que partie en saillie (118; 156).

5. Rouleau d'entraînement selon l'une des revendications précédentes, dans lequel des moyens d'arrêt (120, 122, 128, 142), en particulier sous forme de rainures d'arrêt (122, 142) et de saillies d'arrêt correspondantes (120, 128), sont formés sur les dispositifs de réception (106, 114; 160) et de liaison (116, 118; 156).

6. Rouleau d'entraînement selon l'une des revendications précédentes, dans lequel la au moins une roue de commande est une roue dentée (104).

7. Rouleau d'entraînement selon l'une des revendications précédentes, dans lequel la au moins une roue de commande (152) comporte sur sa circonférence une denture pour la réception d'une courroie dentée.

8. Rouleau d'entraînement selon l'une des revendications précédentes, dans lequel la au moins une roue de commande (104; 152) est montée à rotation sur un axe de rouleau (110) portant le rouleau de commande.

9. Rouleau d'entraînement selon la revendication 8, dans lequel sur la au moins une roue de commande (104; 152) est formé un siège (148) pour la réception d'un palier (146).

10. Rouleau d'entraînement selon la revendication 8 ou 9, dans lequel la au moins une roue de commande (104; 152) et/ou le dispositif de fermeture (130) présente une surface lisse (134, 132), laquelle est en contact de glissement avec l'axe de rouleau (110).
